# EUROPEAN PATENT APPLICATION

(11) **EP 2 424 232 A2**
(43) Date of publication of application: **29.02.2012**
(21) Application number: 11177497.2
(22) Date of filing: 12.08.2011
(51) Int. Cl.: H04N 5/44, H04N 13/04

(54) **Method and apparatus for changing broadcast channel for a 2D/3D switchable display device**

(30) Priority: 26.08.2010 KR 20100082942
(71) Applicant: SAMSUNG ELECTRONICS CO., LTD., Suwon-si, Gyeonggi-do (KR)
(72) Inventor: Park, Jung-kil, Gyeonggi-do (KR)
(74) Representative: Hewett, Jonathan Michael Richard

(57) **Abstract**

A method for changing a channel by dividing channels into 3D channels and non-3D channels includes receiving a command to change a currently broadcast channel, and if the currently broadcast channel is one of the 3D broadcast channels, changing a screen to another of the 3D broadcast channels in accordance with the command, and if the currently broadcast channel is one of the 2D broadcast channels, changing the screen to another of the 2D broadcast channels in accordance with the command.

## Description

The present invention relates to a method for changing a security broadcast channel and a broadcast receiving apparatus for performing the method thereof, and more particularly, to a method for changing a three-dimensional (3D) broadcast channel in a 3D digital broadcast environment by a 3D broadcast receiver and a broadcast receiving apparatus which performs the method thereof. Throughout the specification, the term "3D" can also be understood to mean "stereoscopic".

When a user desires to change a channel while watching an analog channel on a television, the user may change a channel among a plurality of air analog channels out of the entire channel list, and then among a plurality of cable analog channels, and finally among a plurality of air or cable digital channels.

In the case of televisions being sold in countries such as the United States, the method for changing a channel increases in proportion to the number of channels.

Now, 3D broadcast is being tested, but it is expected that more than one 3D broadcast channel will be provided by each broadcast station in the future.

If a user watches 3D broadcast using 3D glasses, whenever a program changes from a 3D program to a two-dimensional (2D) program or a 2D program to a 3D program, the user may take off the 3D glasses or put on the 3D glasses and this causes inconvenience to the user.

Exemplary embodiments of the present invention relate to a method for changing a broadcast channel by dividing channels into 3D channels and non-3D channels so that a user may not be required to put on or take off 3D glasses, and a broadcast receiving apparatus for performing the method thereof.

According to another aspect of the present invention, there is provided a method for changing a broadcast channel including: receiving a command to change a broadcast channel and if a currently broadcast channel is a 3D broadcast mode in a channel list including at least one 2D broadcast channel and at least one 3D broadcast channel, changing a screen to a 3D broadcast channel in accordance with the command to change a broadcast channel, and if the currently broadcast channel is a 2D broadcast mode, changing the screen to a 2D broadcast channel in accordance with the command to change a broadcast channel.

The 2D broadcast channel may be an analog broadcast channel or a 2D digital broadcast channel.

A channel number of a same program in the channel list, which is designated to the 2D broadcast channel and the 3D broadcast channel, may be different from each other or the same.

The information regarding the 3D broadcast mode and the 2D broadcast mode may be transmitted from a broadcast station.

The command to change a broadcast channel may be input through a number key or a channel up/down key.

The command to change a broadcast channel may be input through a previous channel selection key or a preferred channel selection key.

The changing may include determining a type of input means through which the command to change a broadcast channel is input, determining whether a currently broadcast channel is a 2D broadcast mode or the 3D broadcast mode based on the type of input means in the channel list, and if the currently broadcast channel is a 3D broadcast mode, changing the screen to the 3D broadcast channel in accordance with the command to change a broadcast channel, and if the currently broadcast channel is a 2D broadcast mode, changing the screen to the 2D broadcast channel in accordance with the command to change a broadcast channel.

The 3D broadcast mode and the 2D broadcast mode may be automatically set according to a broadcast mode preset by a user or a broadcast mode of received broadcast channel.

According to another aspect of the present invention, there is provided a method for changing a broadcast channel including: receiving a command to change a broadcast channel, receiving an input of a broadcast mode of a broadcast channel corresponding to the received command to change a broadcast channel, and if a currently broadcast channel is a 3D broadcast mode in a channel list including at least one 2D broadcast channel and at least one 3D broadcast channel and the input broadcast mode of the broadcast channel is the 3D broadcast mode, changing the screen to a 3D broadcast channel in accordance with the command to change a broadcast channel, and if the currently broadcast channel is a 2D broadcast mode and the input broadcast mode of the broadcast channel is the 2D broadcast mode, changing the screen to a 2D broadcast channel in accordance with the command to change a broadcast channel.

According to another aspect of the present invention, there is provided a broadcast receiving apparatus including: an input unit which receives a command to change a broadcast channel, a tuner unit which changes a screen to a broadcast channel in accordance with the command to change a broadcast channel, and a controlling unit which controls the tuner unit, if a currently broadcast channel is a 3D broadcast mode in a channel list including at least one 2D broadcast channel and at least one 3D broadcast channel, to change a screen to a 3D broadcast channel in accordance with the command to change a broadcast channel, and if the currently broadcast channel is a 2D broadcast mode, to change the screen to a 2D broadcast channel in accordance with the command to change a broadcast channel.

The 2D broadcast channel may be an analog broadcast channel or a 2D digital broadcast channel.

A channel number of a same program in the channel list, which is designated to the 2D broadcast channel and the 3D broadcast channel, may be different from each other or the same.

Information regarding the 3D broadcast mode and the 2D broadcast mode may be transmitted from a broadcast station.

The command to change a broadcast channel may be input through a number key or a channel up/down key.

The command to change a broadcast channel may be input through a previous channel selection key or a preferred channel selection key.

The controlling unit, according to an exemplary embodiment, includes an input means determining unit which determines a type of input means through which the command to change a broadcast channel is input, a broadcast mode determining unit which determines whether a currently broadcast channel is a 2D broadcast mode or the 3D broadcast mode based on the type of input means in the channel list, and a screen controlling unit which controls the tuner unit, if a currently broadcast channel is a 3D broadcast mode, to change the screen to the 3D broadcast channel in accordance with the command to change a broadcast channel, and if the currently broadcast channel is a 2D broadcast mode, to change the screen to the 2D broadcast channel in accordance with the command to change a broadcast channel.

The 3D broadcast mode and the 2D broadcast mode may be automatically set according to a broadcast mode preset by a user or a broadcast mode of received broadcast channel.

According to another aspect of the present invention, there is provided a broadcast receiving apparatus including: an input unit which receives a command to change a broadcast channel and a broadcast mode of a broadcast channel corresponding to the command to change a broadcast channel, a tuner unit which changes a screen to a broadcast channel corresponding to the command to change a broadcast channel, and a controlling unit which, if a currently broadcast channel is a 3D broadcast mode in a channel list including at least one 2D broadcast channel and at least one 3D broadcast channel and the input broadcast mode of the broadcast channel is the 3D broadcast mode, changes the screen to a 3D broadcast channel in accordance with the command to change a broadcast channel, and if the currently broadcast channel is a 2D broadcast mode and the input broadcast mode of the broadcast channel is the 2D broadcast mode, changes the screen to a 2D broadcast channel in accordance with the command to change a broadcast channel.

The other 3D broadcast channel may be a next sequential one of the plurality of 3D broadcast channels, and the other 2D broadcast channel may be a next sequential one of the plurality of 2D channels.

According to various exemplary embodiments, the method for changing a channel divides broadcast channels into 3D broadcast channels and non-3D broadcast channels. Therefore, a user does not have to put on or take off glasses whenever changing a channel and thus, user convenience may be enhanced.

The above and/or other aspects will be more apparent by describing certain exemplary embodiments with reference to the accompanying drawings, in which:
FIG. 1 is a schematic block diagram illustrating a broadcast receiving apparatus according to an exemplary embodiment;
FIGS. 2 and 3 are views to explain examples of a channel list provided by a broadcast receiving apparatus according to an exemplary embodiment; and
FIG. 4 is a flowchart illustrating a method for changing a broadcast channel according to exemplary embodiment.

Certain exemplary embodiments are described in higher detail below with reference to the accompanying drawings.

In the following description, like drawing reference numerals are used for the like elements, even in different drawings. Expressions such as "at least one of," when preceding a list of elements, modify the entire list and not the individual elements of the list. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

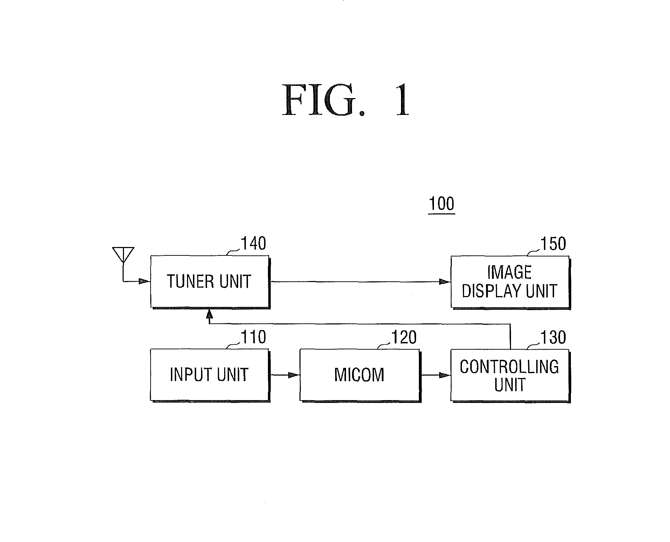

FIG. 1 is a schematic block diagram illustrating a broadcast receiving apparatus according to an exemplary embodiment. As illustrated in FIG. 1, a broadcast receiving apparatus 100 comprises an input unit 110, a microcomputer (micom) 120, a controlling unit 130, a tuner unit 140, and an image display unit 150. Hereinafter, a method for changing a channel according to an exemplary embodiment will be explained in detail.

The input unit 110 comprises selection keys for inputting a broadcast channel command to change a broadcast channel, setting an on/off state of power and setting an environment, wherein a broadcast channel command is input through the selection keys. The input unit 110 may be formed outside the broadcast receiving apparatus 100 and may be embodied as a remote controller. If the input unit 110 is a remote controller, the display apparatus 100 may receive a command to change a broadcast channel through a sensor (not shown).

In an exemplary embodiment, the input unit 110 may receive a broadcast mode of a broadcast channel in addition to a command to change a broadcast channel.

For example, the input unit 110 may set the broadcast mode of a broadcast channel which is subject to a command to change a broadcast channel to a 2D broadcast mode or a 3D broadcast mode.

Meanwhile, the command to change a broadcast channel received through the input unit 110 is transmitted to the micom 120. Herein, the micom 120 transmits the received command to change a broadcast channel to the controlling unit 130 which will be explained later.

The controlling unit 130 may store the command to change a broadcast channel transmitted from the micom 120 in a storage unit (not shown). Accordingly, the controlling unit 130 controls the tuner unit 140 to change a broadcast channel in accordance with the command to change the broadcast channel stored in the storage unit (not shown). Meanwhile, the controlling unit 130 may include an on-screen display (OSD) generating unit (not shown) which generates information for displaying the operation of the broadcast receiving apparatus on a screen using OSD functions.

Specifically, if a currently broadcast channel is a 3D broadcast channel from among a plurality of broadcast channels in a channel list including at least one 2D broadcast channel and at least one 3D broadcast channel, the controlling unit 130 controls the tuner unit 140 to change the currently broadcast channel to another 3D broadcast channel in accordance with the command to change the currently broadcast channel. If the currently broadcast channel is a 2D broadcast channel, the controlling unit 130 controls the tuner unit 140 to change the currently broadcast channel to another 2D broadcast channel in accordance with the command to change the currently broadcast channel.

In other words, the controlling unit 130 controls the tuner unit 140 to change the currently broadcast channel in accordance with the command to change the currently broadcast channel by dividing the plurality of broadcast channels into a 3D broadcast component and a non-3D broadcast component, that is, a 2D broadcast component.

Herein, the at least one 2D broadcast channel may be an analog broadcast channel or a 2D digital broadcast channel.

In other words, each broadcast channel, according to an exemplary embodiment, may be divided into a 3D broadcast component and a non-3D broadcast component. In the exemplary embodiment, the non-3D broadcast component is assumed to be a 2D broadcast component for convenience of explanation. However, the non-3D broadcast component may include an analog broadcast channel and a 2D digital broadcast channel. A 3D broadcast component is a 3D digital broadcast channel.

In an exemplary embodiment, a command to change a broadcast channel may be input through a number key or a channel up key or channel down key.

In other words, the number key may be used to input the command to change the currently broadcast channel or the channel up or down key may be used to input the command to change the currently broadcast channel.

If the command to change the currently broadcast channel is input through the number key and if the currently broadcast channel is a 3D broadcast channel, the controlling unit 130 may control the tuner unit 140 to change the currently broadcast channel to another 3D broadcast channel in accordance with the command to change the currently broadcast channel. If the currently broadcast channel is a 2D broadcast channel, the controlling unit 130 may control the tuner unit 140 to change the currently broadcast channel to another 2D broadcast channel in accordance with the command to change the currently broadcast channel.

If the command to change the currently broadcast channel is input through the channel up key or channel down key and if the currently broadcast channel is a 3D broadcast channel, the controlling unit 130 may control the tuner unit 140 to change the channel to another 3D broadcast channel in accordance with the command to change the currently broadcast channel. If the currently broadcast channel is a 2D broadcast channel, the controlling unit 130 may control the tuner unit 140 to change the currently broadcast channel to another 2D broadcast channel in accordance with the command to change the currently broadcast channel.

In another exemplary embodiment, the command to change the currently broadcast channel may be input through a previous channel selection key or a preferred channel selection key.

In other words, the previous channel selection key may be used to input the command to change the currently broadcast channel or the preferred channel selection key may be used to input the command to change the currently broadcast channel.

If the command to change the currently broadcast channel is input through the previous channel selection key and if the currently broadcast channel is one of the 3D broadcast channels, the controlling unit 130 may control the tuner unit 140 to change the currently broadcast channel to another of the 3D broadcast channels in accordance with the command. If the currently broadcast channel is one of the 2D broadcast channels, the controlling unit 130 may control the tuner unit 140 to change the currently broadcast channel to another of the 2D broadcast channels in accordance with the command to change the currently broadcast channel.

If the command to change the currently broadcast channel is input through the preferred channel selection key and if the currently broadcast channel is one of the 3D broadcast channels, the controlling unit 130 may control the tuner unit 140 to change the currently broadcast channel to another of the 3D broadcast channels in accordance with the command. If the currently broadcast channel is one of the 2D broadcast channels, the controlling unit 130 may control the tuner unit 140 to change the currently broadcast channel to another of the 2D broadcast channels in accordance with the command.

In an exemplary embodiment, the controlling unit 130 may include an input means determining unit (not shown) to determine the type of input means through which the command to change the currently broadcast channel is input, a broadcast mode determining unit (not shown) to determine whether the currently broadcast channel is one of the 2D broadcast channels or one of the 3D broadcast channels according to the type of input means, and a screen controlling unit to control the tuner unit 140 to change the currently broadcast channel to another of the 3D broadcast channels if the currently broadcast channel is one of the 3D broadcast channels and change the currently broadcast channel to another of the 2D broadcast channels if the currently broadcast channel is one of the 2D broadcast channels in accordance with the command.

For example, if the command to change the currently broadcast channel is input through the number key, it is determined whether the currently broadcast channel is one of the 2D broadcast channels or one of the 3D broadcast channels. If it is determined that the currently broadcast channel is one of the 3D broadcast channels, the screen is changed to broadcast another of the 3D broadcast channels. Alternatively, if the command to change the broadcast channel is input through the channel up or down key, it is determined whether the currently broadcast channel is one of the 2D broadcast channels or one of the 3D broadcast channels. If it is determined that the currently broadcast channel is one of the 2D broadcast channels, the screen is changed to another of the 2D broadcast channels in the channel list in accordance with the command.

Herein, the channel number of a same program designated on a 2D broadcast channel and on a 3D broadcast channel may be the same in as each other, or may be different from each other.

In other words, if a program has both a 2D broadcast channel and a 3D broadcast channel, the channel number of the same program designated on the 2D broadcast channel and on the 3D broadcast channel may be the same as, for example, "11-1", or may be different from each other, for example, "11-1" for the 2D broadcast channel and "11-2" for the 3D broadcast channel.

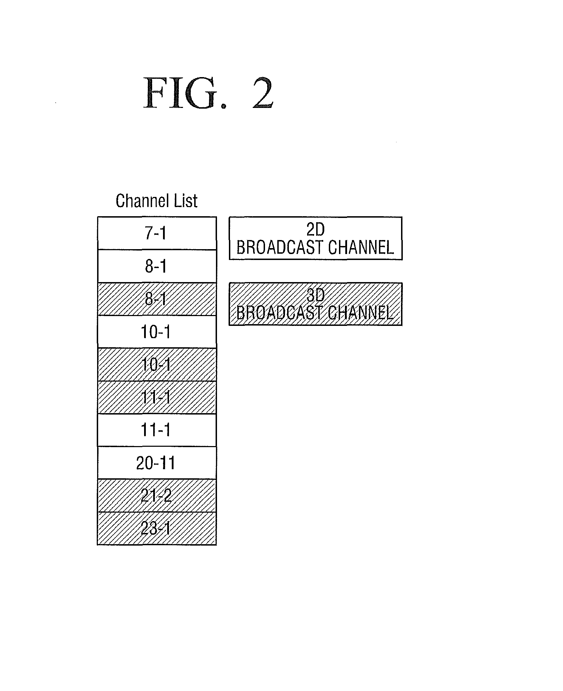

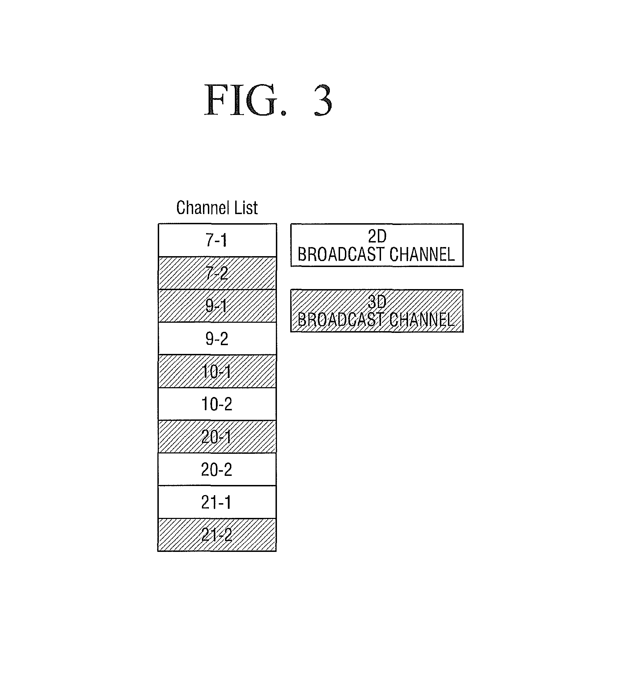

Hereinafter, examples of a channel list will be explained with reference to FIGS. 2 and 3.

FIGS. 2 and 3 are views to explain examples of the channel list provided by the broadcast receiving apparatus according to an exemplary embodiment.

As illustrated in FIGS. 2 and 3, the channel list may be displayed on the screen as being divided into the 2D broadcast channels and the 3D broadcast channels, and one of the broadcast channels may be selected in accordance with the command to change the currently broadcast channel which is input through the number key, the up or down key, the previous channel selection key, the preferred channel selection key, and so forth formed on the input unit. As illustrated in FIG. 2, the channel number of a same program designated on one of the 2D broadcast channels and on one of the 3D broadcast channels may be the same as each other. As illustrated in FIG. 3, the channel number of the same program designated on one of the 2D broadcast channels and on one of the 3D broadcast channels may be different from each other.

According to an exemplary embodiment, if the currently broadcast channel is one of the 2D broadcast channels, the currently broadcast channel may be changed in the order of "7-1, 8-1, 10-1, 11-1, and 20-11" in FIG. 2 and "7-2, 9-1, 10-1, 20-1, and 21-2" in FIG. 3. That is, if the currently broadcast channel displays a 2D image, the command to change the broadcast channel will change the currently broadcast channel to a next sequential channel number of the 2D channels.

In other words, the broadcast receiving apparatus, according to an exemplary embodiment, changes the channel by dividing the plurality of broadcast channels in the channel list into 3D broadcast channels and non-3D broadcast channels and thus, may allow a user to change channels without having to put on or take off 3D glasses and to easily change a channel between 3D digital channels and non-3D digital channels.

Meanwhile, whether each channel is categorized as one of the 3D broadcast channels or one of the 2D broadcast channels may be automatically set according to a broadcast mode preset by the user or a broadcast mode of a received broadcast channel.

In a recent broadcast environment, 3D broadcast channel information, which indicates whether the channel is one of the 3D channels or one of the 2D channels, is not included in the broadcast channel. Instead, 3D broadcast is being tested in only specific channels. In this case, the user may set a broadcast mode by inputting the 3D broadcast mode information with respect to each 3D broadcast channel. It is expected that, in the future, broadcast stations will transmit the 3D broadcast mode information for a program with or in each broadcast channel. In this case, the broadcast receiving apparatus, according to an exemplary embodiment, may receive broadcast mode information included in a received broadcast channel from a broadcast station and change the screen according to the received broadcast mode information.

In an exemplary embodiment, in the case where the broadcast mode information is input from the user, if the currently broadcast channel is one of the 3D broadcast channels in the channel list and if the user inputs that the currently broadcast channel is one of the 3D broadcast channels, the controlling unit 130 may control the tuner unit 140 to change the currently broadcast channel to another of the 3D broadcast channels in accordance with the command to change the currently broadcast channel. If the currently broadcast channel is one of the 2D broadcast channels and the user inputs that the currently broadcast channel is one of the 2D broadcast channels, the controlling unit 130 may control the tuner unit 140 to change the currently broadcast channel to another of the 2D broadcast channels in accordance with the command.

In other words, if the broadcast station does not transmit the 3D broadcast mode information with respect to a broadcast program, a user inputs the 3D broadcast mode information to watch the 3D broadcast channel, and the controlling unit controls the tuner unit to check the channel corresponding to the inputted 3D broadcast mode information and changes the screen according to the inputted 3D broadcast mode information.

The tuner unit 140 changes the broadcast channel in accordance with the command to change the currently broadcast channel. Although not illustrated, the tuner unit 140 may include a tuner, an intermediate frequency amplifying unit, an image signal processing unit, and an red, green, blue (RGB) output unit.

The tuner selects a broadcast channel corresponding to the command to change the currently broadcast channel from among the plurality of broadcast channels received through an antenna (not shown) and changes the currently broadcast channel to the selected broadcast channel. The intermediate frequency amplifying unit (not shown) amplifies an intermediate frequency image signal output from the tuner. The image signal processing unit processes video and audio signals regarding the received broadcast channel. The RGB output unit outputs red, green, blue and brightness signals corresponding to the image signal and may mix and output OSD blacking signals output from the OSD generating unit (not shown).

The image display unit 150 displays an image signal output from the RGB output unit and OSD data on the screen.

Accordingly, the broadcast receiving apparatus, according to an exemplary embodiment, divides broadcast channels into 3D broadcast channels and 2D broadcast channels so as to allow channels to be changed easily and thus, a user does not have to put on or take off glasses whenever changing a channel.

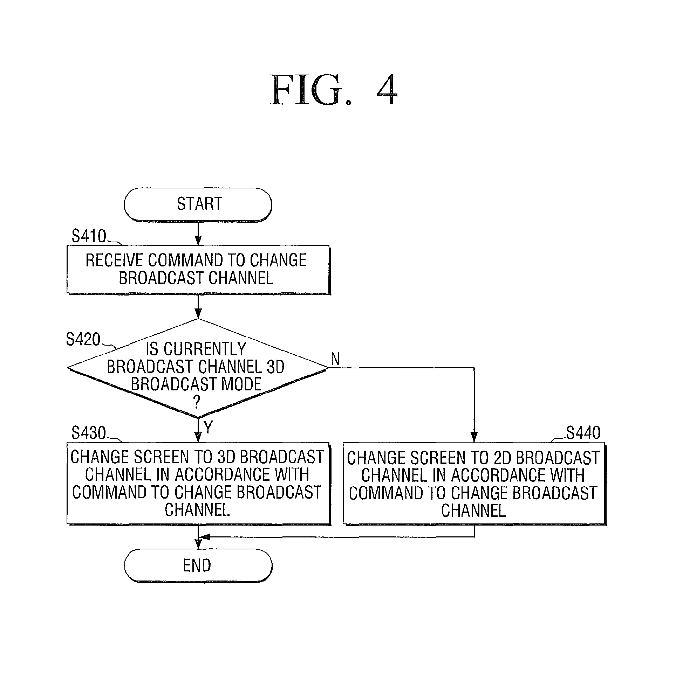

FIG. 4 is a flowchart illustrating a method for changing the currently broadcast channel according to an exemplary embodiment.

First of all, the command to change the currently broadcast channel is received (S410).

Herein, the command to change the currently broadcast channel may be input through an external input unit or through a sensor formed outside the broadcast receiving apparatus.

In addition the 2D broadcast channel may be an analog broadcast channel or a 2D digital broadcast channel.

In other words, the broadcast channels, according to an exemplary embodiment, may be divided into 3D broadcast channels and non-3D broadcast channels. For the convenience of explanation, non-3D broadcast channels are assumed to be 2D broadcast channels in this exemplary embodiment. However, non-3D channels may include both analog broadcast channels and 2D digital broadcast channels.

Subsequently, it is determined whether the currently broadcast channel is one of the 3D broadcast channels or not (S420).

Specifically, it is determined whether the currently broadcast channel is one of the 3D broadcast channels or one of the 2D broadcast channels.

In an exemplary embodiment, whether the currently broadcast channel is one of the 3D channels or one of the 2D channels, i.e., whether the currently broadcast channel is in the 2D mode or in the 3D mode, may be input prior to step S410.

In other words, a user may set the broadcast mode of the currently broadcast channel to the 2D broadcast mode or the 3D broadcast mode.

Subsequently, if it is determined that the currently broadcast channel is one of the 3D broadcast channels from among the channel list, the screen is changed to another of the 3D broadcast channels in accordance with the received command to change the broadcast channel (S430).

In an exemplary embodiment, the type of input means for inputting the command to change the currently broadcast channel may be determined in step S430.

Specifically, it can be determined whether the command to change a broadcast channel is input through the number key, the channel up key or channel down key, the previous channel selection key, or the preferred channel selection key.

In other words, it is determined whether the number key is used to input the command to change the broadcast channel, the channel up or down key is used to input the command to change the broadcast channel, the previous channel selection key is used to input the command to change the broadcast channel, or the preferred channel selection key is used to input the command to change the broadcast channel.

In an exemplary embodiment, whether the currently broadcast channel is one of the 2D broadcast channels or one of the 3D broadcast channels may be determined based on the type of input means, and if the currently broadcast channel is one of the 3D broadcast channels, the screen is changed to another of the 3D broadcast channels in accordance with the command to change the currently broadcast channel, and if the currently broadcast channel is one of the 2D broadcast channels, the screen is changed to another of the 2D broadcast channels in accordance with the command to change the currently broadcast channel.

For example, if the command to change the currently broadcast signal is input through the number key, whether the currently broadcast channel is in the 3D broadcast mode or in the 2D broadcast mode is determined. If it is determined that the currently broadcast channel is in the 3D broadcast mode, the screen is changed to another of the 3D broadcast channels corresponding to the broadcast channel selected through the number key.

Herein, the channel number of a same program designated on one of the 2D broadcast channels and on one of the 3D broadcast channels may be the same or different from each other in the channel list.

That is, if a program is broadcast on both a 2D broadcast channel and a 3D broadcast channel, the channel number of the same program designated on the 2D broadcast channel and the 3D broadcast channel may be the same as each other, for example, "11-1", or may be different from each other, for example, "11-1" for the 2D broadcast channel and "11-2" for the 3D broadcast channel.

In step S420, if it is determined that the currently broadcast channel is one of the 2D broadcast channels from among the channel list, the screen is changed to another one of the 2D broadcast channels corresponding to the command to change the broadcast channel (S440).

Meanwhile, the 3D broadcast mode and the 2D broadcast mode, i.e., whether each channel is a 2D channel or a 3D channel, may be automatically set according to the broadcast mode preset by the user or the broadcast mode of the received broadcast channel.

In the recent broadcast environment, 3D broadcast mode information, i.e., information indicative of whether a channel is a 2D channel or a 3D channel, is not included in the broadcast channel. Instead, 3D broadcast is being tested in only specific channels. In this case, the user may set the broadcast mode by inputting 3D broadcast mode information with respect to the 3D broadcast channel. It is expected that, in the future, broadcast stations will transmit 3D broadcast mode information for a program with or in each broadcast channel. In this case, the broadcast receiving apparatus, according to an exemplary embodiment, may receive broadcast mode information included in the received broadcast channel from the broadcast station and change the screen according to the received broadcast mode information.

In addition, the 3D broadcast mode and the 2D broadcast mode, that is whether a broadcast channel is one of the 2D channels or one of the 3D channels, may be transmitted from the broadcast station. According to the method for changing the broadcast channel in an exemplary embodiment, if the 3D broadcast mode information is received with regard to the currently broadcast program and the currently broadcast channel is one of the 3D broadcast channels, the screen may be changed to another of the 3D channels when the command to change the broadcast channel is input.

Therefore, the method for changing the currently broadcast channel, according to an exemplary embodiment, divides the broadcast channels into 3D broadcast channels and 2D broadcast channels so as to allow the channels to be changed easily and thus, the user does not have to put on or take off glasses whenever changing the channel.

Although a few exemplary embodiments have been shown and described, it would be appreciated by those skilled in the art that changes may be made in these exemplary embodiments without departing from the invention, the scope of which is defined in the claims.

## Claims

1. A method for changing a broadcast channel, comprising:
displaying a currently broadcast channel on a screen;
receiving a command to change the currently broadcast channel to one of a plurality of channels in a channel list, the plurality of channels comprising a plurality of two-dimensional (2D) broadcast channels displaying a plurality of 2D images and a plurality of three-dimensional (3D) broadcast channels displaying a plurality of 3D images; and
changing the screen, if the currently broadcast channel is one of the plurality of 3D broadcast channels, to another of the plurality of 3D broadcast channels in accordance with the command, and changing the screen, if the currently broadcast channel is one of the plurality of 2D broadcast channels, to another of the plurality of 2D broadcast channels in accordance with the command.

2. The method as claimed in claim 1, wherein the plurality of 2D broadcast channels comprises at least one of a plurality of analog broadcast channels or a plurality of 2D digital broadcast channels.

3. The method as claimed in claim 1 or 2, wherein a channel number of one of the plurality of channels displaying a program as the plurality of 2D images is the same as or different from a channel number of another of the plurality of channels displaying the program as the plurality of 3D images.

4. The method as claimed in any one of claim 1 to claim 3, wherein information regarding whether the currently broadcast channel is one of the 3D broadcast channels or one of the 2D broadcast channels is transmitted from a broadcast station.

5. The method as claimed in any one of claim 1 to claim 4, wherein the command to change the currently broadcast channel is input through at least one of a number key, a channel up key, and a channel down key.

6. The method as claimed in any one of claim 1 to claim 5, wherein the command to change the currently broadcast channel is input through at least one of a previous channel selection key and a preferred channel selection key.

7. The method as claimed in any one of claim 1 to claim 6, wherein the changing the screen comprises:
determining a type of input means through which the command to change the currently broadcast channel is input; and
determining whether the currently broadcast channel is one of the plurality of 2D broadcast channels or one of the plurality of 3D broadcast channels based on the type of input means.

8. The method as claimed in any one of claim 1 to claim 7, wherein whether the currently broadcast channel is one of the 3D broadcast channels or one of the 2D broadcast channels is automatically set according to a broadcast mode preset by a user or a broadcast mode information included with the currently broadcast channel.

9. A broadcast receiving apparatus, comprising:
a screen which displays a currently broadcast channel;
an input unit which receives a command to change the currently broadcast channel to one of a plurality of channels in a channel list, the channel list comprising a plurality of 2D broadcast channels and a plurality of 3D broadcast channels;
a tuner unit which changes the screen to the one channel in accordance with the command; and
a controlling unit which controls the tuner unit to change the screen, if the currently broadcast channel is one of the plurality of 3D broadcast channels, to another of the plurality of 3D broadcast channels in accordance with the command, and if the currently broadcast channel is one of the plurality of 2D broadcast channels, to another of the plurality of 2D broadcast channels in accordance with the command.

10. The apparatus as claimed in claim 9, wherein the plurality of 2D broadcast channels comprises at least one of a plurality of analog broadcast channels and a plurality of 2D digital broadcast channels.

11. The apparatus as claimed in claim 9 or claim 10, wherein a channel number of one of the plurality of channels displaying a program as the plurality of 2D images is the same as or different from a channel number of another of the plurality of channels displaying the program as the plurality of 3D images.

12. The apparatus as claimed in any one of claim 9 to claim 11, wherein information regarding whether the currently broadcast channel is one of the 3D broadcast channels or one of the 2D broadcast channels is transmitted from a broadcast station.

13. The apparatus as claimed in any one of claim 9 to claim 12, wherein the command is input through at least one of a number key, a channel up key, and a channel down key.

14. The apparatus as claimed in any one of claim 9 to claim 13, wherein the command is input through at least one of a previous channel selection key and a preferred channel selection key.

15. The apparatus as claimed in any one of claim 9 to claim 14, wherein the controlling unit comprises:
an input means determining unit which determines a type of input means through which the command is input;
a broadcast mode determining unit which determines whether the currently broadcast channel is one of the 2D broadcast channels or the 3D broadcast channels based on the type of input means; and
a screen controlling unit which controls the tuner unit to change the screen in accordance with the command.
